# EUROPÄISCHE PATENTSCHRIFT

(11) **EP 3 284 689 B1**
(45) Veröffentlichungstag und Bekanntmachung des Hinweises auf die Patenterteilung: **27.03.2019**
(21) Anmeldenummer: 17179254.2
(22) Anmeldetag: 03.07.2017
(51) Int. Cl.: B65D 19/18, B65D 19/38

(54) **SEITENWANDANORDNUNG FÜR EINEN BEHÄLTER SOWIE VERFAHREN ZU DESSEN HERSTELLUNG UND BEHÄLTER MIT EINER SOLCHEN SEITENWANDANORDNUNG**
SIDEWALL SYSTEM FOR A CONTAINER, METHOD OF MANUFACTURE, AND CONTAINER COMPRISING SUCH A SIDEWALL SYSTEM
SYSTÈME DE PAROI LATÉRALE POUR UN RÉCIPIENT, SON PROCÉDÉ DE FABRICATION ET RÉCIPIENT COMPRENANT UN TEL SYSTÈME DE PAROI LATÉRALE

(30) Priorität: 16.08.2016 DE 102016115215
(43) Veröffentlichungstag der Anmeldung: 21.02.2018
(73) Patentinhaber: Infinex Holding GmbH, 72221 Haiterbach (DE)
(72) Erfinder: Hartl, Martin, 72160 Horb (DE)
(74) Vertreter: Mammel und Maser

(56) Entgegenhaltungen:
- WO-A1-2012/115561
- CN-A- 105 035 569
- DE-U1-202005 009 037
- US-A- 5 829 595

## Beschreibung

Die Erfindung betrifft eine Seitenwandanordnung für einen Behälter, insbesondere einen Palettenbehälter, welcher mehrere Seitenwände umfasst, die an deren aneinander zuweisenden Seitenkanten durch ein Gelenk miteinander verbindbar sind oder miteinander verbunden sind, so dass diese einen geschlossenen Ring bilden und zusammenfaltbar sind. Die Erfindung betrifft des Weiteren ein Verfahren zur Herstellung einer solchen Seitenwandanordnung sowie einen Behälter, der eine solche Seitenwandanordnung umfasst.

Aus der DE 20 2005 009 037 U1 ist eine solche Seitenwandanordnung für einen Behälter beziehungsweise ein solcher Behälter bekannt. Dieser Behälter besteht aus einem Palettenboden, einem Ring aus mehreren Seitenwänden sowie einem Deckel. An zumindest einer Seitenwand des Behälters ist eine Ladeluke vorgesehen, welche in einer Schließposition eine Öffnung in der Seitenwand schließt und gelenkig mit der Seitenwand verbunden ist. Die Ladeluke wird zumindest durch einen Verschluss in einer Schließposition gehalten. Der Verschluss weist zwei mit Abstand zueinander angeordnete Laschen auf, die einen Verriegelungsabschnitt bilden. Zwischen der Ladeluke und der Seitenwand sind Trennstellen gebildet. Der Verschluss ist verschiebbar an einem Wandabschnitt der Ladeluke oder Seitenwand befestigt, wobei der Verriegelungsabschnitt nach einer Verschiebebewegung in eine Schließstellung derart ausgerichtet ist, dass dieser sich über die Trennstelle hinaus erstreckt und den der Trennstelle gegenüberliegenden Wandabschnitt der Seitenwand oder Ladeluke in der Schließposition umgreift.

Aus der DE 10 2015 100 085 A1 ist des Weiteren eine Seitenwandanordnung für einen Palettenbehälter bekannt, bei dem an zumindest einer Seitenwand der Seitenwandanordnung eine Öffnung vorgesehen ist, die durch eine Ladeluke verschließbar ist. Zum Halten der Ladeluke in der Schließposition ist an der Seitenwand oder der Ladeluke ein Gegenhalter vorgesehen, von dem aus sich ein Halteabschnitt erstreckt, der in einer Trennstelle zwischen dem Wandabschnitt der Seitenwand und dem Wandabschnitt der Ladeluke angeordnet ist und einen Haltekörper aufnimmt, der dem Gegenhalter gegenüberliegend positioniert ist. Somit ist in einer Schließposition der Ladeluke zur Seitenwand in der Trennstelle ein Teil des Verschlusses vorgesehen. Zum Öffnen und Schließen der Ladeluke zur Seitenwand ist erforderlich, dass die Ladeluke unter Überwindung einer durch den Haltekörper ausgeübten Gegenkraft in die Öffnungsstellung und in die Schließstellung bewegbar ist. Der Haltekörper des Verschlusses greift an zwei einander gegenüberliegenden und in die Trennstelle weisenden Stirnseiten der Wandabschnitte an.

Aus der WO 2012/115561 A1 geht ein Schließmechanismus zum Öffnen und Schließen einer Ladeluke in einer Öffnung eines Wandelementes für einen Behälter hervor. Dieser Schließmechanismus basiert auf dem Nut-Feder-Prinzip, bei dem die Ladeluke in einer Schließposition verrastet. Zum Ausbilden dieser Verrastung weisen der Öffnung zugeordnete Seitenkanten des Wandelementes sowie diesen zugewandte Seitenkanten der Ladeluke einen zueinander korrespondierenden S-förmigen Profilquerschnitt auf. Dieser S-förmige Profilquerschnitt ist entlang der Längserstreckung der Seitenkanten der Ladeluke und des Wandelementes ausgebildet, sodass die Ladeluke durch Ineinandergreifen der Profile in die Schließposition verrastet.

Die US 5 829 595 A offenbart einen Behälter, bei dem eine Ladeluke in einer Seitenwand vorgesehen ist. Diese ist entlang einer Seitenkante durch ein Filmscharnier mit der Seitenwand verbunden, sodass die Ladeluke in eine Öffnungs- und eine Schließposition überführbar ist.

Der Erfindung liegt die Aufgabe zugrunde, eine Seitenwandanordnung für einen Behälter, insbesondere Palettenbehälter, vorzuschlagen, der ein einfaches Öffnen und Schließen der Ladeluke ermöglicht und die Ladeluke in der Schließposition selbständig zur Seitenwand sichert. Der Erfindung liegt des Weiteren die Aufgabe zugrunde, ein Verfahren vorzuschlagen, durch welches eine einfache Herstellung einer Ladeluke in einer Seitenwand geschaffen wird, die ein einfaches Öffnen und Schließen ermöglicht, wobei die Ladeluke in der Schließposition selbständig zur Seitenwand gesichert ist. Der Erfindung liegt des Weiteren die Aufgabe zugrunde, einen Behälter, insbesondere Palettenbehälter, vorzuschlagen, der eine solche Seitenwandanordnung mit einer Ladeluke umfasst.

Die Aufgabe wird zum einen durch eine Seitenwandanordnung nach Anspruch 1 gelöst.Erfindungsgemäß sind Seitenkanten, die die Ladeluke in der Breite begrenzen, sowie Seitenkanten der Seitenwand, welche die Öffnung begrenzen, in der Wandstärke gegenüber den daran angrenzenden Wandabschnitten der Seitenwand und Ladeluke reduziert, wobei die Seitenkanten der Ladeluke und die Seitenkanten der Seitenwand durch Einbringen eines Trennschnittes gebildet sind, der sich innerhalb eines Flächenabschnittes erstreckt, der aufgrund einer Verprägung der Seitenwand und der Ladeluke gebildet ist, wobei nach dem Einbringen des Trennschnittes aufgrund einer Entspannung der Seitenwand obere Eckbereiche der Seitenwand zumindest geringfügig in die Öffnung hinein bewegt sind und/oder aufgrund einer Entspannung der Ladeluke die Seitenkanten der Ladeluke jeweils geringfügig nach außen gewandert sind und zumindest eine Seitenkante der Seitenwand oder der Ladeluke eine Lasche aufweist, welche sich von der zugeordneten Seitenkante über die gegenüberliegende Seitenkante der Ladeluke oder Seitenwand hinaus erstreckt und zur zugeordneten Seitenkante ausgerichtet und beabstandet ist, so dass beim Öffnen und Schließen der Ladeluke nach Überwindung einer durch die Lasche erzeugten Haltekraft oder nach Überwinden einer durch in die Öffnung ragenden Eckbereiche der Seitenwand erzeugten Haltekraft, die Ladeluke in eine Öffnungs- und Schließposition überführbar ist und die Ladeluke in der Schließposition mit zumindest einer Seitenkante der Ladeluke im oberen Eckbereich der Ladeluke zwischen der Seitenkante der Seitenwand und einer an der Seitenwand angeordneten Lasche positioniert ist oder eine Seitenkante der Seitenwand zumindest im oberen Eckbereich der Seitenwand zwischen der Seitenkante der Ladeluke und der an der Ladeluke angeordneten Lasche positioniert ist. Der obere Eckbereich der Ladeluke wird durch eine Stirnkante der Ladeluke und die Seitenkante gebildet, die aneinander grenzen. Der obere Eckbereich der Seitenwand wird durch die Stirnkante und die der Öffnung zugeordnete Seitenkante der Seitenwand gebildet. Durch diese Anordnung wird ein Verschluss für die Ladeluke in der Seitenwand gebildet, der zum Öffnen und Schließen der Ladeluke keiner zusätzlichen Betätigung bedarf. Vielmehr kann die Ladeluke durch eine Bewegung in eine Öffnungsrichtung geöffnet und eine Schließposition geschlossen werden. In der Schließposition ist die Ladeluke selbsthaltend zur Seitenwand positioniert. Ein oberer Eckbereich der Seitenwand, der die Öffnung begrenzt beziehungsweise zur Öffnung weist, ragt nach dem Einbringen eines Trennschnittes in die Seitenwand zum Freischneiden der Ladeluke in die ursprüngliche Fläche der Öffnung hinein, welche der Fläche der Ladeluke entspricht. Dadurch kann beim Schließen der Ladeluke ein Nach-innen-Fallen verhindert werden. Alternativ kann durch die an der Ladeluke oder der Seitenwand angeordnete Lasche ein Nach-innen-Fallen der Ladeluke beim Schließen der Öffnung in der Seitenwand verhindert werden. Erstaunlicherweise hat sich herausgestellt, dass durch die Einbringung der Verprägung zur Reduzierung der Wandstärke für die Seitenkanten der Seitenwand und den gegenüberliegenden Seitenkanten der Ladeluke eine Vorspannung in der Seitenwand aufgebaut wird, welche nach der Einbringung der Trennschnitte zur Bildung der Ladeluke abgebaut wird, indem die oberen zur Öffnung weisenden Eckbereiche der Seitenwand sich geringfügig in die Öffnung erstrecken, so dass sich eine Verringerung der Öffnungsweite zwischen den oberen Eckbereichen der Seitenwand ergibt. Dadurch kann entweder ein Nach-innen-Fallen der Ladeluke verhindert und somit ein Anschlag gebildet werden oder der obere Eckbereich der Seitenwand als ein Verriegelungselement wirken.

Eine bevorzugte Ausführungsform der Seitenwandanordnung sieht vor, dass die Lasche an einer Außen- oder Innenseite der Seitenwand oder der Ladeluke befestigt ist. Beispielsweise kann die Lasche an der Außenseite oder Innenseite der Seitenwand angeklebt, angeschweißt oder durch eine Vernietung, Verrastung, Verclipsung oder dergleichen befestigt sein.

Bevorzugt ist die Lasche an einer Außenseite oder einer Innenseite der Seitenwand oder der Ladeluke angeprägt. Dadurch ist die Lasche einteilig an der Seitenwand oder der Ladeluke angeformt und durch ein thermisches Verformen verstellbar. Ansonsten ist kein weiteres Bauteil zum Anbringen erforderlich. Zudem ist eine gute Recyclingfähigkeit gegeben.

Eine bevorzugte Ausgestaltung der Lasche an der Seitenwand oder Ladeluke sieht vor, dass diese in einer Ebene parallel beabstandet zu einer Ebene, in der die Seitenkante der Seitenwand oder Seitenkante der Ladeluke liegt angeordnet ist. Dadurch kann ein Verschluss geschaffen werden, der sich innerhalb der Wandstärke der Seitenwand erstreckt.

Eine weitere bevorzugte Ausgestaltung der Seitenwandanordnung sieht vor, dass die Seitenkante der Seitenwand oder der Ladeluke im Bereich der Lasche im Umfang der Länge der Lasche unterbrochen ist. Dadurch kann zum einen in einfacher Weise eine Anprägung der Lasche erfolgen. Zum anderen kann dadurch ein einfaches Öffnen und Schließen der Ladeluke erzielt werden.

Die Lasche ist bevorzugt blättchenförmig und elastisch nachgiebig, so dass eine Seitenkante unter Überwindung einer Gegenkraft zum Öffnen und Schließen der Ladeluke vorbeigeführt werden kann und die Ladeluke in der Schließposition hält.

Bevorzugt erstreckt sich die der Lasche gegenüberliegenden Seitenkanten der Seitenwand oder der Ladeluke vom Scharnier bis zur Stirnkante der Ladeluke oder Seitenwand durchgehend. Dadurch sind einfache geometrische Verhältnisse geschaffen.

Des Weiteren ist die Wandstärke der Seitenkanten der Seitenwand und der Ladeluke durch eine Verprägung verjüngt und vorzugsweise die Seitenkante durch eine symmetrische Verprägung von der Innen- und Außenseite der Seitenwand und der Ladeluke gebildet. Durch die Reduzierung der Wandstärke im Bereich der Seitenkante gegenüber den benachbarten Wandabschnitten der Seitenwand und der Ladeluke kann ein zwischen der Lasche und einer Seitenkante gebildeter Abstand, wodurch ein Spalt gebildet wird, bei der bestehenden Wandstärke der Seitenwand genügen, um die gegenüberliegende Seitenkante der Seitenwand oder der Ladeluke in der Schließposition aufzunehmen und eine Arretierung zu ermöglichen.

Vorteilhafterweise wird eine Verprägung für die Seitenkanten eingebracht, welche im Querschnitt einen Y-förmigen Verlauf aufweisen. Dadurch wird die Außen- und Innenwand im gleichen Maße bei der Herstellung der Verprägung aufeinander zubewegt, wodurch auch ein geschlossener Verlauf der Seitenkante gebildet wird.

Die Lasche ist bevorzugt an die Stirnkante der Seitenwand oder Ladeluke angrenzend oder in einem oberen Eckbereich der Stirnkante der Seitenwand oder der Ladeluke oder zwischen einem mittleren Bereich der Seitenkante und dem oberen Eckbereich der Seitenkante der Seitenwand oder Ladeluke vorgesehen. Die Abstimmung der Position kann auch in Abhängigkeit der Wandstärken der Seitenwand und/oder der Stirnkanten an der Seitenwand oder Ladeluke erfolgen, um einerseits ein Öffnen und Schließen der Ladeluke beim Überwinden einer geringen Haltekraft zu ermöglichen und andererseits die Ladeluke während des Transports sicher in der Schließposition zu halten.

Bevorzugt ist die Lasche als Anschlag und der obere Eckbereich der Seitenwand beziehungsweise die Seitenkante der Seitenwand im oberen Eckbereich der Seitenwand als Verriegelungselement vorgesehen. Gemäß einer ersten Ausführungsform kann sich die Lasche entlang einer Innenseite der Seitenwand erstrecken und die Seitenkante beziehungsweise die dem oberen Eckbereich zugeordnete Seitenkante der Seitenwand ist in Richtung auf die Außenseite der Seitenwand dazu beabstandet. Somit dient die innenliegende Lasche als Anschlag und die Seitenkante der Seitenwand als Verriegelungselement, welches beim Öffnen und Schließen der Ladeluke nach Überwindung einer Haltekraft in die Öffnungs- oder Schließposition überfahrbar ist. Alternativ kann diese Anordnung auch vertauscht vorgesehen sein, das heißt, dass die Lasche an einer Außenseite der Ladeluke benachbart zur Seitenkante der Ladeluke angebracht ist. Die Seitenkante der Seitenwand dient dann als Verriegelungselement.

Vorteilhafterweise werden für die zumindest eine Seitenwand der Seitenwandanordnung Mehrschichtplatten eingesetzt, welche vorzugsweise aus drei oder mehreren Schichten gebildet sind. Die Stirnkanten weisen deshalb eine Wandstärke auf, welche sich aus der Anzahl der Schichten sowie der Materialdicke der einzelnen Schichten ergibt.

Die der Erfindung zugrundeliegende Aufgabe wird des Weiteren durch ein Verfahren zur Herstellung einer Seitenwandanordnung nach Anspruch 10 gelöst, Die Seitenwandanordnung besteht aus mehreren Seitenwänden, die durch Gelenke miteinander verbindbar sind oder miteinander verbunden sind und einen geschlossenen Ring bilden, der zusammenfaltbar ist.Zur Bildung einer Ladeluke wird in wenigstens eine Seitenwand zumindest eine Verprägung eingebracht, durch welche ein Scharnier zur gelenkigen Anbindung der Ladeluke an die Seitenwand hergestellt wird und sich vom Scharnier bis zur Stirnkante der Seitenwand erstreckende Flächenabschnitte mit zumindest einer Verprägung eingebracht werden, durch welche die Wandstärke verringert wird, wobei die Flächenabschnitte mit der Verprägung jeweils ein Trennschnitt eingebracht wird und wobei zumindest eine Seitenkante der Seitenwand oder zumindest eine Seitenkante der Ladeluke mit einer Lasche versehen wird, welche an einer Innenseite oder Außenseite der Seitenwand oder der Ladeluke befestigt oder angeprägt ist und mit Abstand zur Seitenkante ausgerichtet ist und sich über die gegenüberliegende Seitenkante der Ladeluke oder Seitenwand hinaus erstreckt. Dadurch wird eine kostengünstige Herstellung einer solchen Seitenwandanordnung ermöglicht. Es können wenige Arbeitsschritte genügen, um die Seitenwand mit einer Ladeluke für eine Seitenwandanordnung herzustellen. Durch die Einbringung der Verprägung zur Bildung der Flächenabschnitte, die sich bevorzugt vom Scharnier der zu bildenden Ladeluke bis zur Stirnkante der Seitenwand beziehungsweise des Ringes erstrecken, wird eine Vorspannung in die Seitenwand beziehungsweise des Ringes eingebracht, welche sich durch das nachträgliche Einbringen eines Trennschnittes im Bereich der Flächenabschnitte zur Herstellung der schwenkbaren Ladeluke lösen können. Dadurch erstrecken sich obere Eckbereiche der Seitenwand, welche durch die aneinandergrenzenden Seitenkante und Stirnkante der Seitenwand gebildet werden, zumindest geringfügig in die randoffene Öffnung hinein, so dass bei einer Schließbewegung der Ladeluke dieser obere Eckbereich der Seitenwand ein Nach-innen-Fallen der Ladeluke durch den daran anliegenden jeweiligen oberen Eckbereich der Ladeluke verhindern. Der jeweilige obere Eckbereich der Ladeluke wird durch die Seitenkante und die Stirnkante der Ladeluke begrenzt.

Bevorzugt wird die Lasche durch eine einseitige in die Seitenwand oder Ladeluke eingebrachte Verprägung ausgebildet. Vorzugsweise ist eine Außenseite der Lasche bündig zur Außenseite der Seitenwand oder Lasche. Dadurch kann mittels einer thermischen Verformung an der bestehenden Seitenwand oder Ladeluke eine solche Lasche angeformt werden. Somit kann durch ein sich auf die Verprägung für das Scharnier der Flächenabschnitte oder einer aufeinander folgenden Verprägung des Scharniers und der Flächenabschnitte anschließender weiterer Schritt einer Verprägung die Lasche unmittelbar an der Seitenwand oder Ladeluke angeformt werden.

Des Weiteren erstreckt sich die Seitenkante der Seitenwand oder Ladeluke von einer Stirnkante der Seitenwand bis zum Scharnier, und die Verprägung wird über die gesamte Länge der Seitenkante an der Seitenwand und der Ladeluke eingebracht. Dadurch kann die Seitenkante der Seitenwand und der Ladeluke geschlossen und/oder zusätzlich ausgesteift werden. Zudem kann durch die verringerte Wandstärke ein Verschluss in die Seitenwand integriert werden, der nicht über die Materialstärke der Seitenwand hinaussteht.

Des Weiteren werden bevorzugt die Flächenabschnitte zur Bildung der Seitenkanten und das Scharnier in einem Arbeitsschritt in die Seitenwand eingebracht. Somit kann beispielsweise in nur drei Arbeitsschritten eine Ladeluke mit einem Verschluss in die Seitenwand eingebracht werden. In einem ersten Arbeitsschritt werden das Scharnier und die Verprägung der Flächenabschnitte im Bereich des nachfolgenden Trennschnitts eingebracht. In einem zweiten Arbeitsschritt wird der Trennschnitt in die Flächenabschnitte gesetzt. In einem dritten Arbeitsschritt wird die Lasche angeprägt. Darauffolgend kann die Ladeluke in einer Schließposition gehalten werden, wobei ein oberer Eckbereich der Stirnkante der Seitenwände einen Anschlag für die Ladeluke bildet und die Lasche andererseits die Ladeluke in der Schließposition hält.

Des Weiteren wird zum Anbringen der Lasche an der Ladeluke oder der Seitenwand die Ladeluke in eine Stellung außerhalb der Schließstellung übergeführt. Dadurch kann eine flächige Auflage für die Seitenwand oder die Lasche geschaffen werden, um darauffolgend die Lasche durch die Verprägung einzubringen oder die Lasche mit der Seitenwand oder Ladeluke zu befestigen.

Die der Erfindung zugrundeliegende Aufgabe wird des Weiteren durch einen Behälter, insbesondere Palettenbehälter, nach Anspruch 15 gelöst. Der Behälter umfasst einen Boden, eine Seitenwandanordnung und einen Deckel, wobei die Seitenwandanordnung nach einer der oben beschriebenen Ausführungsformen ausgebildet ist.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
- Figur 1: eine perspektivische Ansicht eines Behälters mit einer Seitenwandanordnung und einer in einer Seitenwand vorgesehenen Ladeluke,
- Figur 2: eine schematische Ansicht auf eine Seitenwand in einem ersten Arbeitsschritt zur Herstellung einer Ladeluke,
- Figur 3: eine schematische Schnittansicht entlang der Linie III-III in Figur 2,
- Figur 4: eine schematische Seitenansicht der Seitenwand gemäß Figur 2 nach dem Einbringen einer Lasche,
- Figur 5: eine schematische Schnittansicht entlang der Linie V-V in Figur 4,
- Figur 6: eine schematisch vergrößerte Seitenansicht der Seitenwand mit der Ladeluke und des Verschlusses in einer Schließposition,
- Figur 7: eine schematische Ansicht von oben auf eine Stirnkante der Seitenwand und Ladeluke,
- Figur 8: eine schematische Ansicht einer alternativen Ausführungsform zu Figur 4,
- Figur 9: eine schematische Seitenansicht der nicht näher dargestellten Ladeluke bei der Ausführungsform in Figur 8, und
- Figur 10: eine schematische Schnittansicht entlang der Linie X-X in Figur 9.

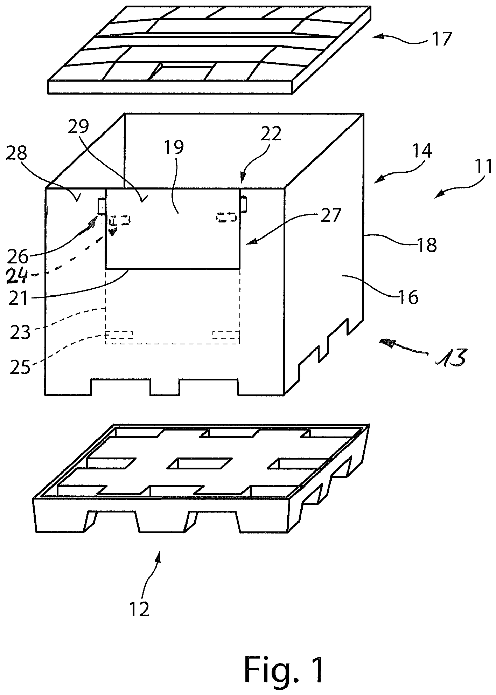

In Figur 1 ist eine isometrische Darstellung eines Behälters 11, insbesondere eines zusammenlegbaren Behälters 11, dargestellt. Dieser Behälter 11 umfasst einen Boden 12, der beispielsweise palettenförmig ausgebildet ist. Dieser Boden 12 nimmt eine Seitenwandanordnung 13 auf, welche aus mehreren Seitenwänden 16, beispielsweise aus vier Seitenwänden 16, gebildet ist. Diese vier Seitenwände 16 sind entlang deren Schmalseiten mit einem Gelenk 18 miteinander verbunden und bilden eine Hülse oder einen Ring 14. Dieser Ring 14 ist bevorzugt faltbar ausgebildet. Beispielsweise kann eine M-Faltung oder dergleichen vorgesehen sein. Auf dem Ring 14 ist ein Deckel 17 vorgesehen, der den Behälter 11 schließt. Dadurch kann ein geschlossener Transportbehälter geschaffen werden, der darüber hinaus auch stapelbar ist.

Der Deckel 17 ist bevorzugt haubenförmig ausgebildet. Dies weist im Falle des Transportbehälters 11 den Vorteil auf, dass die Seitenwandanordnung 13, insbesondere der zusammengefaltete Ring 14, der auf dem Boden 12 aufliegt, von dem Deckel 17 abgedeckt ist, so dass ein kleines Transportvolumen des Behälters 11 für den Rücktransport ermöglicht ist. Solche Behälter 11 bestehen bevorzugt aus Kunststoff, insbesondere recyclingfähigem Kunststoff. Die Seitenwände 16 können aus zwei- oder dreischichtigen Kunststofffolien oder Kunststoffplatten ausgebildet sein, wie beispielsweise Hohlkammerplatten oder verrippte Platten mit glatten Außenseiten.

Die Seitenwand 16 weist in einer Öffnung 27 eine Ladeluke 19 auf, die an eine obere Stirnkante der Seitenwand 16 angrenzt. Die Ladeluke 19 ist gelenkig mit der Seitenwand 16 verbunden. Bevorzugt ist ein Scharnier 21, insbesondere Filmscharnier, ausgebildet. Die Ladeluke 19 kann aus der in Figur 1 dargestellten Schließposition 22 in eine gestrichelt dargestellte Öffnungsposition 23 oder Entladeposition für darin enthaltenes Transportgut übergeführt werden, um eine einfache Entnahme der darin gelagerten Teile oder ein einfaches Be- und Entladen zu ermöglichen.

Die Ladeluke 19 ist durch Verschlüsse 26 in der Schließposition 22 gehalten. Diese Verschlüsse 26 sind nahe der oberen Stirnkante 37 der Seitenwand 16 vorgesehen.

Ergänzend kann an der Ladeluke 19 benachbart zu den Verschlüssen 26 ein Klett- und Flauschband 24, 25 vorgesehen sein, welche sich verhaken, um die Ladeluke 19 in einer Öffnungsposition 23 zu fixieren.

Die zwei Verschlüsse 26 können gemäß einer ersten Ausführungsform in einem Wandabschnitt 28 der Seitenwände 16 befestigt sein. Alternativ können die Verschlüsse 26 auch an einem Wandabschnitt 29 der Ladeluke 19 befestigt sein. Der nachfolgend im Detail noch näher beschriebene Verschluss 26 ist ortsfest in dem Wandabschnitt 28, 29 angeordnet.

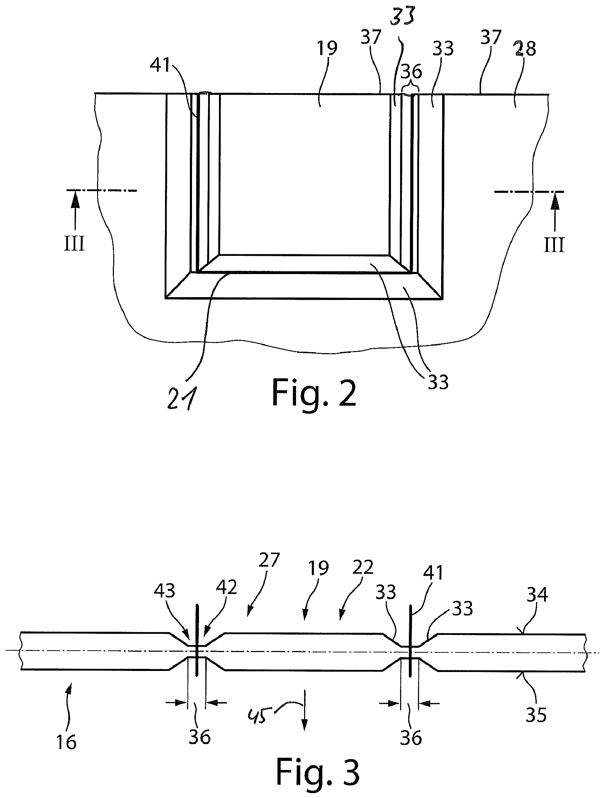

In den Figuren 2 bis 7 ist eine erste Ausführungsform für den Verschluss 26 beschrieben.

In den Figuren 2 und 3 ist eine schematische Seitenansicht und eine Ansicht von oben auf die Seitenwand 16 nach der Durchführung eines ersten Verfahrensschritts zur Herstellung des Verschlusses 26 gemäß Figur 1 dargestellt.

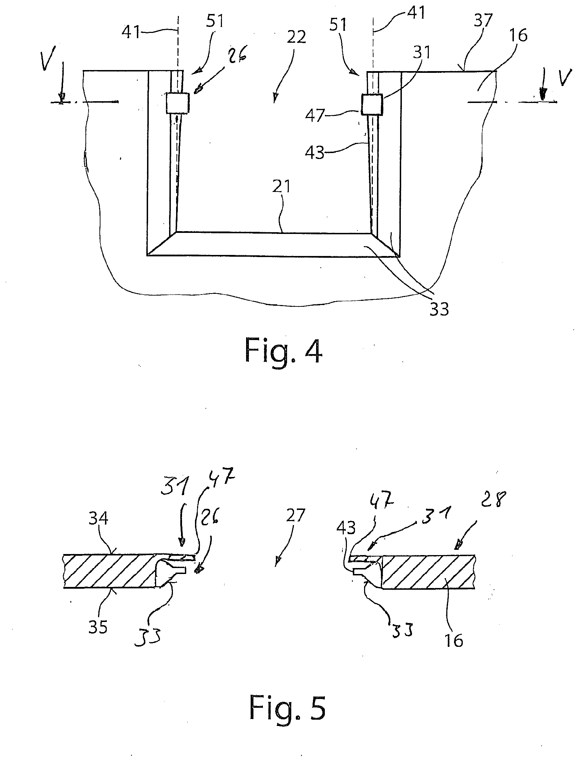

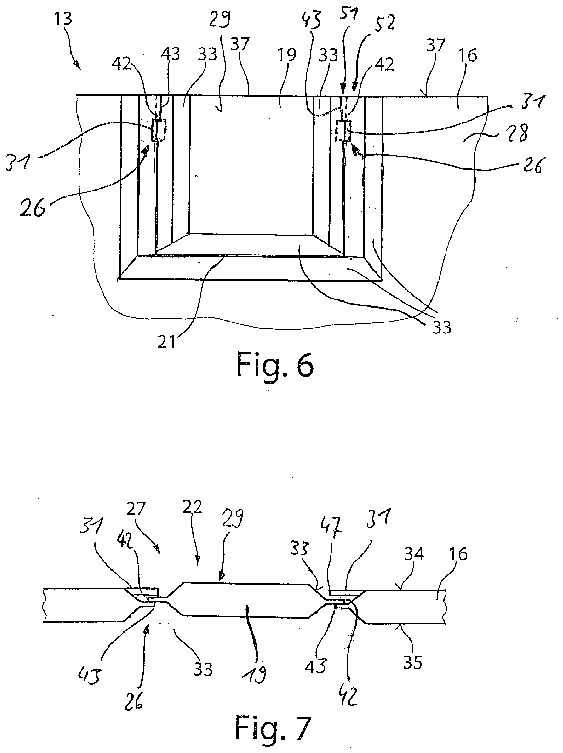

Die Figuren 4 und 5 zeigen eine schematische Seitenansicht und eine schematische Schnittansicht entlang der Linie V-V in Figur 4 und die Ausbildung einer Lasche 31 für einen Verschluss 26 nach einem zweiten und einem dritten Arbeitsschritt. In den Figuren 6 und 7 ist eine schematische Seitenansicht und eine Draufsicht von einer Seitenwand mit einer durch den Verschluss 26 in Schließposition gehaltenen Ladeluke 19 dargestellt.

Zur Herstellung einer Seitenwandanordnung 13 ist bevorzugt eine Mehrschichtplatte zur Bildung der Seitenwände 16 vorgesehen. Bevorzugt ist eine Dreischichtplatte vorgesehen, eine sogenannte Hohlkammerplatte oder Strukturkammerplatte, welche aus zwei äußeren glatten Schichten besteht und dazwischen liegend eine Schicht aufweist, die ein- oder beidseitig aus einer Ebene herausgeformte Vorsprünge umfasst. Zur Herstellung der Ladeluke 19 und des Verschlusses 26 wird bevorzugt in einem ersten Arbeitsschritt das Scharnier 21 durch ein Prägewerkzeug in die Seitenwand 16 eingebracht. Bevorzugt wird eine Heißprägung durchgeführt. Beim Einbringen des Scharniers 21 werden Schrägen 33 gebildet, welche eine verringerte Wandstärke im Bereich des Scharniers 21 zu einer Innenseite 34 und einer Außenseite 35 der Seitenwand 16 überbrücken.

Gleichzeitig zum Einbringen des Scharniers 21 oder in einem darauffolgenden Arbeitsschritt werden Flächenabschnitte 36 eingebracht, welche gegenüber der Wandstärke der Seitenwand 16 verringert sind. Diese Flächenabschnitte 36 sind bevorzugt rechtwinklig zum Scharnier 21 ausgerichtet. Diese Flächenabschnitte 36 erstrecken sich vom jeweiligen Endbereich des Scharniers 21 bis zur Stirnkante 37 der Seitenwand 16 und der Ladeluke 19. Seitlich an die Flächenabschnitte 36 schließen sich wiederum Schrägen 33 an, durch welche ein Übergang von einer verringerten Wandstärke der Seitenwand 16 und der Ladeluke 19 gegenüber benachbarten Wandabschnitten 28, 29 der Seitenwand 16 und Ladeluke 19 gebildet wird. Bevorzugt werden die Flächenabschnitte 36 von einer Innenseite 34 und einer Außenseite 35 gleichermaßen eingebracht, so dass eine symmetrische Ausgestaltung bezüglich den Schrägen 33 geschaffen ist. Beim Einbringen der Flächenabschnitte 36 werden die Seitenwand 16 und die Ladeluke 19 in diesem Bereich verprägt. Beispielsweise wird bei einer Dreischichtplatte die mittlere strukturierte Schicht zusammengepresst und liegt bündig mit einer äußeren und einer inneren Schicht 34, 35 aneinander an. Die Dicke des Flächenabschnitts 36 entspricht bevorzugt der Materialstärke der jeweiligen Anzahl der Schichten der Seitenwand 16 oder kann durch ergänzendes Einbringen von Wärme und/oder Druck noch verringert sein.

Durch dieses Einbringen der Flächenabschnitte 36 und vorzugsweise der Ausbildung der Schrägen 33 wird in diesem Bereich aufgrund der Materialverdrängung eine innere Spannung beziehungsweise Vorspannung aufgebaut.

Nach dem Einbringen der Verprägung für das Scharnier 21 und die Flächenabschnitte 36 wird mittels eines Messers oder eines Heizschwertes ein Trennschnitt 41 eingebracht, der sich innerhalb der Flächenabschnitte 36 erstreckt. Dieser Trennschnitt 41 kann auch die Länge der Flächenabschnitte 36 aufweisen. Durch die Einbringung des Trennschnittes 41 werden Seitenkanten 42 der Ladeluke 19 und Seitenkanten 43 der Seitenwand 16 gebildet. Die Seitenkanten 42, 43 weisen jeweils aufeinander zu. Darauffolgend kann die Ladeluke 19 in eine Öffnungsrichtung verschwenkt werden. Die Öffnungsrichtung kann aus der Bildebene heraustreten beziehungsweise ist in Figur 3 durch den Pfeil 45 dargestellt.

In einem darauffolgenden Arbeitsschritt wird die Lasche 31 gemäß der in den Figuren 4 und 5 dargestellten Ausführungsform angeprägt. Die Ladeluke 19 ist aus der Schließposition herausgeschwenkt, so dass die Öffnung 27 frei zugänglich ist. Mit einem Prägewerkzeug wird auf eine Außenseite 35 der Seitenwandanordnung 13 beziehungsweise der Seitenwand 16 eingewirkt, so dass eine Materialverformung in Richtung auf die Innenseite 34 der Seitenwand 16 erfolgt. Durch die thermische Verformung kann eine Unterbrechung der Seitenkante 43 in dem Bereich erfolgen, in dem die Lasche 31 angeprägt wird. Bevorzugt liegt die Lasche 31 mit ihrer Außenseite bündig zur Innenseite 34 der Seitenwand 16 an. Die Länge der Lasche 31 ist im Verhältnis zur Länge der Seitenkante 43, welche durch einen Abstand zwischen dem Scharnier 21 und der Stirnkante 37 der Seitenwand 16 bestimmt ist, um ein Vielfaches kleiner. Vorzugsweise ist die Länge der Lasche 31 kleiner als ein Viertel oder ein Fünftel der Länge der Seitenkanten 43 ausgebildet.

Die Breite der Lasche 31 ist derart ausgebildet, dass eine vordere Laschenkante 47 in einer Draufsicht gesehen deckungsgleich mit der Seitenkante 43 ist oder geringfügig darüber hinaus in die Öffnung 27 hineinragt.

Die Lasche 31 liegt mit deren Laschenkante 47 in einer Ebene parallel beabstandet zu einer Ebene, in der die Seitenkanten 43 der Seitenwand 16 liegen. Dadurch kann in der Schnittansicht gemäß Figur 5 gesehen zwischen der Laschenkante 47 und der Stirnkante 43 ein Abstand beziehungsweise ein Spaltmaß ausgebildet sein, welcher größer als die Dicke der Seitenkante 43 nach der Verprägung der Flächenabschnitte 36 ist. Dadurch ist die Seitenkante 42 der Ladeluke 19 zwischen der Laschenkante 47 der Lasche 31 und der Seitenkante 43 der Seitenwand 16 in einer Schließposition 22 positionierbar. Da im Bereich der Lasche 31 die Seitenkanten 43 unterbrochen sind, erstreckt sich die Lasche 31 in der Länge entsprechend der Unterbrechung der Seitenkante 43. Der Verschluss 26 wird bevorzugt durch die Lasche 31 und der dieser zugeordneten Seitenkante 42, 43 beziehungsweise der Seitenkante 42, 43 gebildet, welche durch die Verprägung der Lasche 31 unterbrochen ist. Analoges gilt für den Fall, dass die Lasche 31 den Seitenkanten 42, 43 zugeordnet und an der Seitenwand 16 oder Ladeluke 19 befestigt wird. Dann ist die Seitenkante 42, 43 nicht unterbrochen, kann jedoch unterbrochen werden.

Aufgrund der Verprägung zur Bildung der Flächenabschnitte 36, wie dies in den Figuren 2 und 3 dargestellt ist, erfolgt nach dem Einbringen der Trennschnitte 41 eine Entspannung der Seitenwand 16, so dass die oberen aufeinander zugerichteten Eckbereiche 51 sich zumindest geringfügig in die Öffnung 27 hinein bewegen. Dadurch entsteht eine trapezförmige Öffnung 47 oder quasi trapezförmige Öffnung 47. Die Seitenkanten 43 sind ausgehend vom Scharnier 21 in Richtung Stirnkante 37 gesehen aufeinander zugeneigt, wie dies durch den Verlauf der Seitenkanten 43 zum Trennschnitt 41 dargestellt ist.

Die Ladeluke 19 kann bezüglich dem Abstand der Seitenkanten 42 gleichbleiben, so dass diese parallel zueinander ausgebildet sind. Aufgrund der durch die Flächenabschnitte 36 eingebrachten Vorspannung können die Seitenkanten 42 der Ladeluke 19 jeweils geringfügig nach außen wandern, das heißt, dass sich die Stirnkante 37 der Ladeluke 19 geringfügig verlängert und größer wird als die Öffnungsweite der Öffnung 27 beim Einbringen der Trennschnitte 41.

In Figur 6 ist eine schematische Seitenansicht des Verschlusses 26 und in Figur 7 eine Draufsicht auf die Stirnkante 37 der Seitenwand 16 und Ladeluke 19 in einer Schließstellung 22 dargestellt.

Beim Überführen der Ladeluke 19 aus der Öffnungsposition 23 in die Schließposition 22, welche in den Figuren 6 und 7 dargestellt ist, werden die Seitenkanten 42 der Ladeluke 19 an der jeweiligen Seitenkante 43 der Seitenwand 16, insbesondere des Abschnitts der Seitenkante 43 im oberen Eckbereich 51 der Seitenwand 16, unter Überwindung einer Haltekraft oder Rückstellkraft vorbeigeführt. Darauffolgend wird die weitere Bewegung der Ladeluke 19 in Schließrichtung durch die Lasche 31, welche vorzugsweise als Anschlag dient, gesperrt. Die Seitenkanten 42 der Ladeluke 19 liegen zwischen dem oberen Eckbereich 51 der Seitenwand 16 und der Lasche 31. Zudem liegt ein oberer Eckbereich 52 der Ladeluke 19 angrenzend an die Seitenkante 42 der Ladeluke am oberen Eckbereich 51 der Seitenwand 16 an. Dieses Aneinanderliegen wird dann noch verstärkt, wenn die Eckbereiche 52 der Ladeluke 19 ebenso zumindest geringfügig nach außen wandern. Dadurch ist ein Nach-innen-Schwenken der Ladeluke 19 gesperrt. Beim Öffnen der Ladeluke 19 zum Überführen in die Öffnungsposition 23 wird die Ladeluke 19 nach Überwinden der Haltekraft der Seitenkante 43 der Seitenwand 16 freigegeben und kann in die Öffnungsposition 23 übergeführt werden.

Aus der Draufsicht auf die Seitenwand 16 und Ladeluke 19 wird ersichtlich, dass in der Schließposition 22 die Ladeluke 19 mit der Außenseite 35 nahezu bündig zur Außenseite 35 der Seitenwand 16 liegt.

Alternativ kann die Lasche 31 anstelle der in den Figuren 5 und 7 dargestellten Anordnung, bei der diese Lasche 31 bündig zur Innenseite 34 der Seitenwand 16 angeordnet ist, dahingehend angeformt werden, dass diese benachbart oder bündig zur Außenseite 35 der Seitenwand 16 ist. Für diese alternative Anordnung gilt Analoges wie bei der vorbeschriebenen Anordnung. Bei dieser alternativen Anordnung dient die Lasche 31 nicht als Anschlag gegen das Nach-innen-Fallen, sondern als Verriegelungselement. Die Seitenkanten 43 der Seitenwand 16 verhindern dann ein Nach-innen-Fallen der Ladeluke 19 und dienen somit als Anschlag.

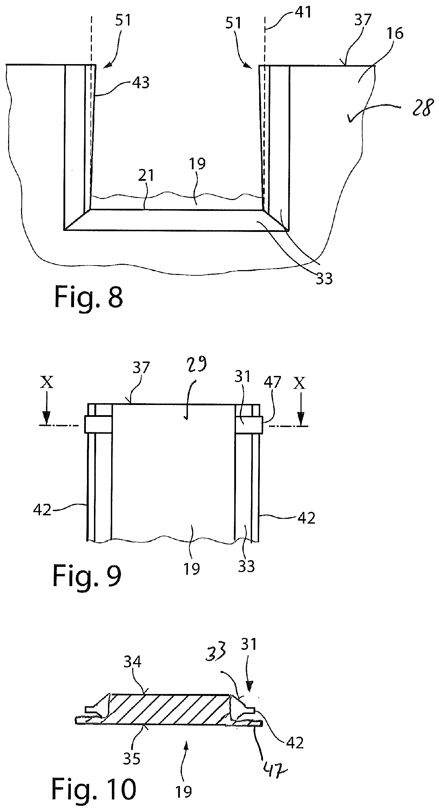

In den Figuren 8 bis 10 ist eine alternative Ausführungsform des Verschlusses zu den Figuren 6 und 7 dargestellt, welche nach den Arbeitsschritten gemäß den Figuren 2 bis 5 hergestellt ist.

Dieser Verschluss 26 weicht lediglich dahingehend von der vorbeschriebenen Ausführungsform ab, dass die Lasche 31 an der Ladeluke 19 und nicht an der Stirnwand 16 angeordnet ist. Dabei ist die Lasche 31 derart an der Ladeluke 19 angeprägt, dass die Lasche 31 in Richtung auf die Außenseite 35 versetzt zu den Seitenkanten 42 der Ladeluke 19 angeordnet ist. Bevorzugt ist die Lasche 31 bündig zur Innenseite 34 vorgesehen. Im Übrigen gelten die Ausführungsformen und Vorteile sowie die alternative Ausführungsform des vorbeschriebenen Verschlusses 26 gemäß den Figuren 2 bis 7 analog für die Ausführungsform gemäß den Figuren 8 bis 10.

## Patentansprüche

1. Seitenwandanordnung für einen Behälter (13), insbesondere Palettenbehälter, welche mehrere Seitenwände (16) umfasst, die an aufeinander zuweisenden Schmalseiten der Seitenwände (16) durch ein Gelenk (18) miteinander verbindbar sind oder miteinander verbunden sind, so dass ein geschlossener Ring (14) aus Seitenwänden (16) gebildet ist, der zusammenfaltbar ist, wobei an zumindest einer Seitenwand (16) eine Ladeluke (19) vorgesehen ist, welche in einer Schließposition (22) eine Öffnung (27) schließt, die zu einer Stirnkante (37) der Seitenwand (16) hin offen ist und wobei die Ladeluke (19) gelenkig durch ein Scharnier (21) mit der Seitenwand (16) verbunden ist, **dadurch gekennzeichnet,**
- **dass** Seitenkanten (42) der Ladeluke (19), welche diese in der Breite begrenzen, und Seitenkanten (43) der Seitenwand (16), welche die Öffnung (27) in der Seitenwand (16) begrenzen, in der Wandstärke gegenüber deren angrenzenden Wandabschnitten (28, 29) der Seitenwand (16) und der Ladeluke (19) reduziert sind,
- **dass** die Seitenkanten (42) der Ladeluke (19) und die Seitenkanten (43) der Seitenwand (16) durch Einbringen eines Trennschnittes (41) gebildet sind, der sich innerhalb eines Flächenabschnittes (36) erstreckt, der aufgrund einer Verprägung der Seitenwand (16) und der Ladeluke (19) gebildet ist,
- **dass** nach dem Einbringen des Trennschnittes (41) aufgrund einer Entspannung der Seitenwand (16) obere Eckbereiche (51) der Seitenwand (16) zumindest geringfügig in die Öffnung (27) hinein bewegt sind und/oder aufgrund einer Entspannung der Ladeluke (19) die Seitenkanten (42) der Ladeluke (19) jeweils geringfügig nach außen gewandert sind,
- **dass** an zumindest einer Seitenkante (43) der Seitenwand (16) oder zumindest einer Seitenkante (42) der Ladeluke (19) zumindest eine Lasche (31) vorgesehen ist, welche sich über die gegenüberliegende Seitenkante (42, 43) der Ladeluke (19) oder der Seitenwand (16) hinaus erstreckt und beim Öffnen und Schließen der Ladeluke (19) nach Überwinden einer durch die Lasche (31) erzeugten Haltekraft oder nach Überwinden einer durch die in die Öffnung (27) ragenden Eckbereiche (51) der Seitenwand (16) erzeugten Haltekraft, die Ladeluke (19) in eine Öffnungsposition (23) oder die Schließposition (22) überführbar ist und
- **dass** in der Schließposition (22) die Seitenkante (42) im oberen Eckbereich (52) der Ladeluke (19) zwischen der Seitenkante (43) der Seitenwand (16) und der an der Seitenwand (16) angeordneten Lasche (31) positioniert ist oder die Seitenkante (43) im oberen Eckbereich (51) der Seitenwand (16) zwischen der Seitenkante (42) der Ladeluke (19) und der an der Ladeluke (19) angeordneten Lasche (31) positioniert ist.

2. Seitenwandanordnung nach Anspruch 1, **dadurch gekennzeichnet, dass** die Lasche (31) an einer Außenseite (35) oder einer Innenseite (34) der Seitenwand (16) oder Ladeluke (19) befestigt ist oder die Lasche (31) an einer Außenseite (35) oder Innenseite (34) der Seitenwand (16) oder der Ladeluke (19) angeprägt ist.

3. Seitenwandanordnung nach einem der vorhergehenden Ansprüche, **dadurch gekennzeichnet, dass** die Lasche (31) in einer Ebene parallel beabstandet zu einer Ebene, in der die Seitenkante (43) der Seitenwand (16) oder Seitenkante (42) der Ladeluke (19) liegt, angeordnet ist.

4. Seitenwandanordnung nach einem der vorhergehenden Ansprüche, **dadurch gekennzeichnet, dass** die Seitenkante (42, 43) der Seitenwand (16) oder der Ladeluke (19) im Bereich der an der Seitenwand (16) oder Ladeluke (19) angeordneten Lasche (31) der Seitenwand (16) oder im Umfang der Länge der Lasche (31) unterbrochen ist.

5. Seitenwandanordnung nach einem der Ansprüche 1 bis 3, **dadurch gekennzeichnet, dass** sich die der Lasche (31) gegenüberliegende Seitenkante (42, 43) der Seitenwand (16) oder der Ladeluke (19) vom Scharnier (21) bis zur Stirnkante (37) der Seitenwand (16) durchgehend erstreckt.

6. Seitenwandanordnung nach einem der vorhergehenden Ansprüche, **dadurch gekennzeichnet, dass** die Seitenkanten (42, 43) durch eine symmetrische Verprägung von der Innenseite (34) und Außenseite (35) der Seitenwand (16) und der Ladeluke (19) eingebracht sind, insbesondere dass die Verprägung der Seitenkanten (42, 43) mit daran angrenzenden Schrägen (33) zu den Wandabschnitten (28, 29) der Seitenwand (16) und der Ladeluke (19) im Querschnitt gesehen einen Y-förmigen Verlauf aufweist.

7. Seitenwandanordnung nach einem der vorhergehenden Ansprüche, **dadurch gekennzeichnet, dass** die Lasche (31) an die Stirnkante (37) der Seitenwand (16) oder Ladeluke (19) angrenzt oder im oberen Eckbereich (51, 52) der Seitenwand (16) oder Ladeluke (19) angeprägt ist oder zwischen einem mittleren Bereich der Seitenkante (42, 43) der Seitenwand (16) oder Ladeluke (19) und der Stirnkante (37) der Seitenwand (16) oder Ladeluke (19) positioniert ist.

8. Seitenwandanordnung nach einem der vorhergehenden Ansprüche, **dadurch gekennzeichnet, dass** die Lasche (31) als Anschlag und zumindest die Seitenkante (43) im oberen Eckbereich (51) der Seitenwand (16) als Verriegelungselement vorgesehen sind.

9. Seitenwandanordnung nach einem der vorhergehenden Ansprüche, **dadurch gekennzeichnet, dass** die zumindest eine Seitenwand (16) aus einer Mehrschichtplatte, insbesondere Dreischichtplatte, gebildet ist und die Seitenkanten (42, 43) der Seitenwand (16) und der Ladeluke (19) eine Wandstärke aufweisen, die der Materialdicke der jeweiligen Anzahl der Schichten der Mehrschichtplatte entspricht.

10. Verfahren zur Herstellung einer Seitenwandanordnung (13), welche aus mehreren Seitenwänden (16) gebildet wird, die an Schmalseiten durch Gelenke (18) miteinander zu einem Ring (14) verbindbar sind oder miteinander verbunden sind, der zusammenfaltbar ist und in wenigstens eine Seitenwand (16) eine Ladeluke (19) eingebracht wird, welche in einer Schließposition (22) eine Öffnung (27) in der Seitenwand (16) schließt, welche zur Stirnkante (37) der Seitenwand (16) offen ist, **dadurch gekennzeichnet,**
- **dass** zur Bildung der Ladeluke (19) in der Seitenwand (16) zumindest eine Verprägung eingebracht wird, durch welche ein Scharnier (21) zur gelenkigen Anbindung der Ladeluke (19) an die Seitenwand (16) hergestellt wird,
- **dass** durch zumindest eine Verprägung Flächenabschnitte (36) in die Seitenwand (16) eingebracht werden, wobei die Wandstärke der Flächenabschnitte (36) durch die Verprägung verringert wird,
- **dass** in die Flächenabschnitte (36) jeweils ein Trennschnitt (41) eingebracht wird, der sich teilweise oder vollständig von der Stirnkante (37) der Seitenwand (16) in Richtung auf oder bis zum jeweiligen Endbereich des Scharniers (21) erstreckt, und
- dasszumindest einer durch den Trennschnitt (41) gebildeten Seitenkante (43) der Seitenwand (16) oder zumindest einer durch den Trennschnitt (41) gebildeten Seitenkante (42) der Ladeluke (19) eine Lasche (31) zugeordnet wird, welche an einer Außenseite (35) oder einer Innenseite (34) der Seitenwand (16) oder Ladeluke (19) befestigt oder angeprägt ist und sich ausgehend von der zugeordneten Seitenkante (43, 42) über die gegenüberliegende Seitenkante (42, 43) der Ladeluke (19) oder der Seitenwand (16) hinaus erstreckt und mit Abstand zur zugeordneten Seitenkante (42, 43) ausgerichtet wird.

11. Verfahren nach Anspruch 10, **dadurch gekennzeichnet, dass** die Lasche (31) durch eine einseitige, in die Seitenwand (16) oder die Ladeluke (19) eingebrachte Verprägung ausgebildet wird und vorzugsweise eine Außenseite der Lasche (31) bündig zu einer Außenseite (35) der Seitenwand (16) oder einer Innenseite (34) der Ladeluke (19) ist.

12. Verfahren nach Anspruch 10 oder 11, **dadurch gekennzeichnet, dass** die Seitenkanten (42, 43) der Seitenwand (16) oder Ladeluke (19) sich von einer Stirnkante (37) der Seitenwand (16) bis zum jeweiligen Endbereich des Scharniers (21) erstrecken und die durch die Verprägung ausgebildeten Flächenabschnitte (36) sich über die gesamte Länge der Seitenkanten (42, 43) der Seitenwand (16) und Ladeluke (19) eingebracht werden.

13. Verfahren nach einem der Ansprüche 10 bis 12, **dadurch gekennzeichnet, dass** die in der Wandstärke verringerten Flächenabschnitte (36) und das Scharnier (21) in einem gemeinsamen Arbeitsschritt in die Seitenwand (16) eingebracht werden.

14. Verfahren nach einem der Ansprüche 10 bis 13, **dadurch gekennzeichnet, dass** zum Anbringen der Lasche (31) an der Seitenwand (16) oder Ladeluke (19) die Ladeluke (19) in einer Stellung außerhalb der Schließposition (22) übergeführt wird.

15. Behälter, insbesondere Palettenbehälter, mit einem Boden (12), einer Seitenwandanordnung (13) und einem Deckel (17), wobei die Seitenwandanordnung (13) auf dem Boden (12) aufsteckbar und der Deckel (17) auf die Seitenwandanordnung (13) aufsetzbar ist, **dadurch gekennzeichnet, dass** die Seitenwandanordnung (13) nach einem der Ansprüche 1 bis 9 ausgebildet ist.

## Claims

1. Side wall arrangement for a container (11), in particular a pallet container, which comprises several side walls (16) that are connectable to one another on their narrow sides allocated to one another of the side walls (16) by means of a joint (18) or are connected to one another, such that a closed ring (14) is formed from the side walls (16) which is foldable together, wherein a loading hatch (19) is provided on the at least one side wall (16), said loading hatch (19) closing an opening (27) in a closed position (22), said opening (27) being open towards an end edge (37) of the side wall (16), and wherein the loading hatch (19) is flexibly connected to the side wall (16) by means of a hinge (21), **characterised in that**
- side edges (42) of the loading hatch (19) which border it in terms of width and side edges (43) of the side wall (16) which border the opening (27) in the side wall (16) are reduced in terms of wall thickness relative to their adjacent wall sections (28, 29) of the side wall (16) and the loading hatch (19),
- the side edges (42) of the loading latch (19) and the side edges (53) of the side wall (16) are formed by introducing a separation cut (41), which extends in a surface section (36) formed by stamping the side wall (16) and the loading lath (19),
- after introducing the separation cut (41), due to an easing of the tension at the side wall (10), the upper corner region (51) of the side wall (16) moves at least slightly into the opening (27) and / or an easing of the tension of the loading latch (19), the side edges (42) at the loading latch (19) each move slightly outwards,
- on at least one side edge (43) of the side wall (16) or at least one side edge (42) of the loading hatch (19), at least one tab (31) is provided which extends beyond the opposing side edge (42, 43) of the loading hatch (19) or the side wall (16) and are transferable into the open position (23) or closed position (22) when opening and closing the loading hatch (19) after overcoming a holding force produced by the tab (31) or after overcoming a holding force produced by corner regions (51) of the side wall (16) projecting into the opening (27) and
- the side edge (42) is positioned in the upper corner region (52) of the loading hatch (19) between the side edge (43) of the side wall (16) and the tab (31) arranged on the side wall (16) or the side edge (43) is positioned in the upper corner region (51) of the side wall (16) between the side edge (42) of the loading hatch (19) and the tab (31) arranged on the loading hatch (19).

2. Side wall arrangement according to claim 1, **characterised in that** the tab (31) is provided on an outside (35) or an inside (34) of the side wall (16) or loading hatch (19), or the tab (31) is stamped on an outside (35) or inside (34) of the side wall (16) or of the loading hatch (19).

3. Side wall arrangement according to one of the preceding claims, **characterised in that** the tab (31) is provided in a plane parallel to a rejected plane, in which the side edge (43) of the side wall (16) or the side edge (42) of the loading latch (19) are provided.

4. Side wall arrangement according to one of the preceding claims, **characterised in that** the side edge (42, 43) of the side wall (16) or of the loading hatch (19) is broken in the region of the tab (31) of the side wall (16) arranged on the side wall (16) or loading hatch (19) or to the extent of the length of the tab (31).

5. Side wall arrangement according to one of the preceeding claims 1 to 3, **characterised in that** the side edge (42, 43) of the side wall (16) or of the loading hatch (19) opposite the tab (31) extends continuously from the hinge (21) up to the end edge (37) of the side wall (16).

6. Side wall arrangement according to one of the preceding claims, **characterised in that** the side edges (42, 43) are introduced by symmetrically stamping the inside (34) and outside (35) of the side wall (16) and the loading hatch (19), in particular that the stamping of the side edges (42, 43) having adjacent slants (33) relative to the wall sections (28, 29) of the side wall (16) and the loading hatch (19), when seen in cross-section, has a Y-shaped course.

7. Side wall arrangement according to one of the preceding claims, **characterised in that** the tab (31) is adjacent to the end edge (37) of the side wall (16) or loading hatch (19) or is stamped in the upper corner region (51, 52) of the side wall (16) or loading hatch (19) or is positioned between a central region of the side edge (42, 43) of the side wall (16) or loading hatch (19) up to the end edge (37) of the side wall (16) or loading hatch (19).

8. Side wall arrangement according to one of the preceding claims, **characterised in that** the tab (31) is provided as a stop and, in the upper corner region (51) of the side wall (16), at least the side edges (43) are provided as locking elements.

9. Side wall arrangement according to one of the preceding claims, **characterised in that** the at least one side wall (16) is formed from a multi-layer plate, in particular a three-layer plate, and the side edges (42, 43) of the side wall (16) and the loading hatch (19) have a wall thickness that is formed from the number of layers of the multi-layer plate and preferably from the material thickness of the layers.

10. Method for producing a side wall arrangement (13) which is formed from several side walls (16) which are connectable to one another relative to a ring (14) on the narrow sides by means of joints (18) or are connected to one another, which ring (14) are foldable together, and a loading hatch (19) is installed in at least one side wall (16), which loading hatch (19) closes an opening (27) in the side wall (16) in a closed position (22) which is open towards the end edge (37) of the side wall (16), **characterised in that**
- at least one stamping is introduced in the side wall (16) for forming the loading hatch (19), by means of which stamping a hinge (21) for flexibly connecting the loading hatch (19) to the side wall (16) is produced,
- in which surface sections (36) are installed in the side wall (16) by means of at least one stamping, wherein the wall thickness of the surface sections (36) is reduced by stamping,
- in which, in each case, one separation cut (41) is introduced into the surface sections (36), which separation cut (41) extends partially or completely from the end edge (37) of the side wall (16) in the direction of or up to the respective end region of the hinge (21), and
- in which a tab (31) is allocated to at least one side edge (43) of the side wall (16) formed by the separation cut (41) or at least one side edge (42) of the loading hatch (19) formed by the separation cut (41), which tab (31) is fixed or stamped on an outside (35) or an inside (34) of the side wall (16) or the loading lath (19) on which tab (31) extends beyond the opposing side edge (42, 43) of the loading hatch (19) or the side wall (16) starting from the allocated side edge (43, 42) and is aligned spaced apart from the allocated side edge (42, 43).

11. Method according to claim 10, **characterised in that** the tab (31) is formed by a one-sided stamping that is introduced into the side wall (16) or the loading hatch (19) and preferably an outside of the tab (31) is flush to an outside (35) of the side wall (16) or an inside (34) or the loading hatch (19).

12. Method according to claim 10 or 11, **characterised in that** the side edges (42, 43) of the side wall (16) or the loading hatch (19) extend from an end edge (37) of the side wall (16) up to the respective end region of the hinge (21) and the surface sections (36) formed by stamping are introduced across the entire length of the side edges (42, 43) of the side wall (16) and loading hatch (19).

13. Method according to one of claims 10 to 12, **characterised in that** the surface sections (36) that are reduced in terms of wall thickness and the hinge (21) are installed in the side wall (16) in a communal work step.

14. Method according to one of claims 10 to 13, **characterised in that** the loading hatch (19) is transferred into a position outside the closed position (22) for applying the tab (31) to the side wall (16) or loading hatch (19).

15. Container, in particular a pallet container, having a base (12) and a cover (17) between which a side wall arrangement (13) is arrangeable, wherein the side wall arrangement (13) is fittable on the base (12) and the cover (17) is placeable on the side wall arrangement (13), **characterised in that** the side wall arrangement (13) is formed according to one of claims 1 to 9.

## Revendications

1. Système de paroi latérale pour un récipient (13), en particulier récipient-palette, qui comprend plusieurs parois latérales (16), qui peuvent être ou sont reliées les unes aux autres sur des côtés étroits en regard l'un de l'autre des parois latérales (16) par une articulation (18), de telle sorte qu'un cercle fermé (14) de parois latérales (16) est formé, lequel peut être replié sur lui-même, une trappe de chargement (19) étant prévue sur au moins une paroi latérale (16), ladite trappe de chargement fermant, dans une position de fermeture (22), une ouverture (27), qui est ouverte en direction d'un rebord frontal (37) de la paroi latérale (16) et la trappe de chargement (19) étant reliée à la paroi latérale (16) de manière articulée par une charnière (21), **caractérisé**
- **en ce que** des rebords latéraux (42) de la trappe de chargement (19), qui délimitent celle-ci en largeur, et des rebords latéraux (43) de la paroi latérale (16), qui délimitent l'ouverture (27) dans la paroi latérale (16), sont réduite par rapport à leurs parties de paroi (28, 29) adjacentes de la paroi latérale (16) et de la trappe de chargement (19),
- **en ce que** les rebords latéraux (42) de la trappe de chargement (19) et les rebords latéraux (43) de la paroi latérale (16) sont formés en faisant une coupe de séparation (41), qui s'étend à l'intérieur d'une partie plane (36) qui est formée en raison d'un matriçage de la paroi latérale (16) et de la trappe de chargement (19),
- **en ce que**, après avoir fait la coupe de séparation (41), en raison d'une détente de la paroi latérale (16), des zones de coin (51) supérieures de la paroi latérale (16) sont déplacées au moins légèrement dans l'ouverture (27) et/ou en raison d'une détente de la trappe de chargement (19), les rebords latéraux (42) de la trappe de chargement (19) ont respectivement migré légèrement vers l'extérieur,
- **en ce que**, sur au moins un rebord latéral (43) de la paroi latérale (16) ou au moins un rebord latéral (42) de la trappe de chargement (19), est prévue au moins une languette (31), qui s'étend au-delà du rebord latéral (42, 43) opposé de la trappe de chargement (19) ou de la paroi latérale (16) et, lors de l'ouverture et la fermeture de la trappe de chargement (19), après avoir surmonté une force de retenue générée par la languette (31) ou après avoir surmonté une force de retenue générée par les zones de coin (51) de la paroi latérale (16) dépassant dans l'ouverture (27), la trappe de chargement (19) peut être transférée dans une position d'ouverture (23) ou la position de fermeture (22) et
- **en ce que**, dans la position de fermeture (22), le rebord latéral (42) dans la zone de coin (52) supérieure de la trappe de chargement (19) est positionné entre le rebord latéral (43) de la paroi latérale (16) et la languette (31) disposée sur la paroi latérale (16) ou le rebord latéral (43) dans la zone de coin (51) supérieure de la paroi latérale (16) est positionné entre le rebord latéral (42) de la trappe de chargement (19) et la languette (31) disposée sur la trappe de chargement (19).

2. Système de paroi latérale selon la revendication 1, **caractérisé en ce que** la languette (31) est fixée sur un côté extérieur (35) ou un côté intérieur (34) de la paroi latérale (16) ou trappe de chargement (19) ou la languette (31) est matricée sur un côté extérieur (35) ou côté intérieur (34) de la paroi latérale (16) ou de la trappe de chargement (19).

3. Système de paroi latérale selon l'une des revendications précédentes, **caractérisé en ce que** la languette (31) est disposée dans un plan espacé de manière parallèle à un plan dans lequel se trouve le rebord latéral (43) de la paroi latérale (16) ou le rebord latéral (42) de la trappe de chargement (19).

4. Système de paroi latérale selon l'une des revendications précédentes, **caractérisé en ce que** le rebord latéral (42, 43) de la paroi latérale (16) ou de la trappe de chargement (19) est interrompu dans la zone de la languette (31) de la paroi latérale (16) disposée sur la paroi latérale (16) ou la trappe de chargement (19) ou dans la périphérie de la longueur de la languette (31).

5. Système de paroi latérale selon l'une des revendications 1 à 3, **caractérisé en ce que** le rebord latéral (42, 43) de la paroi latérale (16) ou de la trappe de chargement (19) opposé à la languette (31) s'étend en continu de la charnière (21) au rebord frontal (37) de la paroi latérale (16).

6. Système de paroi latérale selon l'une des revendications précédentes, **caractérisé en ce que** les rebords latéraux (42, 43) sont faites par un matriçage symétrique du côté intérieur (34) et du côté extérieur (35) de la paroi latérale (16) et de la trappe de chargement (19), en particulier **en ce que** le matriçage des rebords latéraux (42, 43) présente, avec des inclinaisons (33) adjacentes à ceux-ci vers les parties de paroi (28, 29) de la paroi latérale (16) et de la trappe de chargement (19), un tracé en forme de Y vu en coupe transversale.

7. Système de paroi latérale selon l'une des revendications précédentes, **caractérisé en ce que** la languette (31) est adjacente au rebord frontal (37) de la paroi latérale (16) ou la trappe de chargement (19) ou est matricée dans la zone de coin (51, 52) supérieure de la paroi latérale (16) ou la trappe de chargement (19) ou est positionnée entre une zone médiane du rebord latéral (42, 43) de la paroi latérale (16) ou la trappe de chargement (19) et le rebord frontal (37) de la paroi latérale (16) ou la trappe de chargement (19).

8. Système de paroi latérale selon l'une des revendications précédentes, **caractérisé en ce que** la languette (31) est prévue comme butée et au moins le rebord latéral (43) dans la zone de coin (51) supérieure de la paroi latérale (16) est prévu comme élément de verrouillage.

9. Système de paroi latérale selon l'une des revendications précédentes, **caractérisé en ce que** l'au moins une paroi latérale (16) est formée à partir d'un panneau à couches multiples, en particulier un panneau à trois couches, et les rebords latéraux (42, 43) de la paroi latérale (16) et de la trappe de chargement (19) présentent une épaisseur de paroi qui correspond à l'épaisseur du matériau du nombre respectif des couches du panneau à couches multiples.

10. Procédé de fabrication d'un système de paroi latérale (13), qui est formé à partir de plusieurs parois latérales (16), qui peuvent être ou sont reliées les unes aux autres sur des côtés étroits par des articulations (18) pour former un cercle (14), qui peut être replié et dans au moins une paroi latérale (16) est faite une trappe de chargement (19), qui, dans une position de fermeture (22), ferme une ouverture (27) dans la paroi latérale (16), qui est ouverte vers le rebord frontal (37) de la paroi latérale (16), **caractérisé**
- **en ce que**, pour la formation de la trappe de chargement (19), au moins un matriçage est fait dans la paroi latérale (16), au moyen duquel une charnière (21) est fabriquée pour la liaison articulée de la trappe de chargement (19) avec la paroi latérale (16),
- **en ce que**, par au moins un matriçage, des parties planes (36) sont faites dans la paroi latérale (16), l'épaisseur de paroi des parties planes (36) étant réduite par le matriçage,
- **en ce qu'**une coupe de séparation (41) est faite respectivement dans les parties planes (36), qui s'étend en partie ou entièrement à partir du rebord frontal (37) de la paroi latérale (16) en direction de ou jusqu'à la zone terminale respective de la charnière (21), et
- **en ce qu'**une languette (31) est associée à au moins un rebord latéral (43) de la paroi latérale (16) formé par la coupe de séparation (41) ou au moins un rebord latéral (42) de la trappe de chargement (19) formé par la coupe de séparation (41), ladite languette étant fixée ou matricée sur un côté extérieur (35) ou un côté intérieur (34) de la paroi latérale (16) ou la trappe de chargement (19) et s'étendant à partir du rebord latéral (43, 42) associé au-delà du rebord latéral (42, 43) opposé de la trappe de chargement (19) ou de la paroi latérale (16) et étant alignée avec un espace par rapport au rebord latéral (42, 43) associé.

11. Procédé selon la revendication 10, **caractérisé en ce que** la languette (31) est formée par un matriçage pratiqué d'un côté dans la paroi latérale (16) ou la trappe de chargement (19) et de préférence un côté extérieur de la languette (31) est affleure avec un côté extérieur (35) de la paroi latérale (16) ou avec un côté intérieur (34) de la trappe de chargement (19).

12. Procédé selon la revendication 10 ou 11, **caractérisé en ce que** les rebords latéraux (42, 43) de la paroi latérale (16) ou de la trappe de chargement (19) s'étendent d'un rebord frontal (37) de la paroi latérale (16) à la zone terminale respective de la charnière (21) et les parties planes (36) formées par le matriçage sont faites sur toute la longueur des rebords latéraux (42, 43) de la paroi latérale (16) et la trappe de chargement (19).

13. Procédé selon l'une des revendications 10 à 12, **caractérisé en ce que** les parties planes (36) dont l'épaisseur de paroi est réduite et la charnière (21) sont faites dans la paroi latérale (16) dans une étape de travail commune.

14. Procédé selon l'une des revendications 10 à 13, **caractérisé en ce que**, pour appliquer la languette (31) sur la paroi latérale (16) ou la trappe de chargement (19), la trappe de chargement (19) est transférée dans une position en dehors de la position de fermeture (22).

15. Récipient, en particulier récipient-palette, comprenant un fond (12), un système de paroi latérale (13) et un couvercle (17), le système de paroi latérale (13) pouvant être emboîté sur le fond (12) et le couvercle (17) pouvant être placé sur le système de paroi latérale (13), **caractérisé en ce que** le système de paroi latérale (13) est réalisé selon l'une des revendications 1 à 9.
